# FASCICULE DE BREVET EUROPEEN

(11) **EP 3 025 054 B1**
(45) Date de publication et mention de la délivrance du brevet: **02.01.2019**
(21) Numéro de dépôt: 14750708.1
(22) Date de dépôt: 28.07.2014
(51) Int. Cl.: F03D 1/06

(54) **PALE D'ÉOLIENNE SEGMENTÉE MUNIE D'UN DISPOSITIF D'ASSEMBLAGE**
SEGMENTIERTE WINDTURBINENSCHAUFEL MIT EINER MONTAGEVORRICHTUNG
SEGMENTED WIND TURBINE BLADE PROVIDED WITH AN ASSEMBLY DEVICE

(30) Priorité: 26.07.2013 FR 1357385
(43) Date de publication de la demande: 01.06.2016
(73) Titulaire: Societe Europeenne d'Ingenierie et de Developpement des Energies Renouvelables., 97110 Pointe a Pitre (FR)
(72) Inventeur: SALLES, Jean-Paul, 76000 Rouen (FR)
(74) Mandataire: IPAZ
(86) Numéro de dépôt international: PCT/EP2014/066137
(87) Numéro de publication internationale: WO 2015/011291

(56) Documents cités:
- WO-A2-2008/012615
- WO-A2-2012/167788
- US-A1- 2011 206 510

## Description

L'invention concerne une pale d'éolienne segmentée comprenant deux segments attachés l'un à l'autre de manière démontable et un dispositif d'assemblage. Elle concerne également une éolienne munie d'une telle pale.

Le domaine de l'invention est le domaine des pales d'éolienne segmentées ou sectionnées, c'est-à-dire des pales d'éolienne comprenant une pluralité de segments, en particulier deux segments assemblés entre eux de sorte à former la pale.

Les pales d'éolienne segmentées ou sectionnées permettent, avantageusement de réduire la voilure en cas de cyclone ou de typhon.

### Etat de la technique

On connait de nombreuses pales pour éolienne qui sont segmentées, c'est-à-dire composées de plusieurs segments assemblés entre eux, de manière démontable ou non, pour former une pale.

Une pale segmentée présente l'avantage de pouvoir être transportée de manière plus simple comparée au transport d'une pale entière. En effet, il est plus facile de transporter des segments d'une pale présentant des dimensions plus petites comparées aux dimensions de la pale entière.

Une pale segmentée, bien que répondant aux difficultés de transport, pose la difficulté d'assemblage sur site des segments de pale. Selon une première solution, les segments de pale sont assemblés au sol avant la mise en place de la pale sur l'éolienne. Cette solution facilite l'assemblage des segments de pale mais, il reste toujours la difficulté de la mise en place d'une pale entière sur l'éolienne.

Selon une deuxième solution, les segments de pale sont assemblés un par un directement sur l'éolienne en commençant par le segment de pale, dit proximal, se trouvant du côté du pied de pale et en terminant par le segment de pale, dit distal, se trouvant du côté du saumon de la pale. Cette deuxième solution répond à la difficulté de la mise en place de pale, puisqu'elle évite de manipuler une pale entière et de la hisser jusqu'au rotor de l'éolienne. Cependant, l'assemblage des segments de pale dans cette deuxième solution est plus difficile comparée à un assemblage au sol.

Le document US 2011/0206510 A1 décrit une pale d'éolienne composée de plusieurs segments qui sont assemblés entre eux de manière démontable grâce à un dispositif d'assemblage comprenant un câble traversant les différents segments de pale et un enrouleur permettant d'enrouler, respectivement de dérouler, le câble pour assembler, respectivement désassembler, les segments de pale.

Cependant, il s'avère que la pale décrite dans ce document ne répond pas vraiment à la difficulté d'assemblage de segments de pale directement sur l'éolienne, et l'assemblage des segments de pale reste difficile et consommateur en temps, et présente des risques de dégât pour les segments de pale.

Le document WO 2012/167788A2 décrit une éolienne munie d'une pale d'éolienne en deux parties. La pale d'éolienne est assemblée grâce à un dispositif d'assemblage indépendant de la pale.

L'invention a pour but de pallier les inconvénients précités.

Notamment, le but de l'invention est de proposer une pale d'éolienne comprenant deux segments démontables permettant un assemblage sur site, et en particulier directement sur une éolienne, plus simple comparé aux pales connues.

Un autre but de l'invention est de proposer une pale d'éolienne comprenant deux segments démontables permettant un assemblage sur site, et en particulier directement sur une éolienne, moins consommateur en temps comparé aux pales connues.

Enfin, il est un but de l'invention de proposer une pale d'éolienne comprenant deux segments démontables permettant un assemblage sur site, et en particulier directement sur une éolienne, présentant moins de risques de dégât pour la pale.

### Exposé de l'invention

L'invention permet d'atteindre au moins un des buts précités par une pale d'éolienne comportant :
- deux segments de pale assemblés entre eux de manière démontable, l'un desdits segments, dit segment de pied, comportant le pied de ladite pale, et l'autre desdits segments, dit segment de saumon, comportant le saumon de la pale, et
- un dispositif, dit d'assemblage, desdits segments entre eux ;
ladite pale étant caractérisée en ce que le dispositif d'assemblage comprend :
- au moins un premier câble disposé du côté du bord d'attaque de la pale, et attaché d'une part au segment de saumon et d'autre part à un premier enrouleur disposé du côté du segment de pied, et
- au moins un deuxième câble disposé du côté du bord de fuite de la pale, et attaché d'une part au segment de saumon et d'autre part à un deuxième enrouleur disposé du côté du segment de pied ;
chacun desdits câbles étant prévu pour tirer le segment de saumon vers le segment de pied lors de l'assemblage desdits segments et accompagner le segment de saumon lors du désassemblage desdits segments.

L'utilisation de deux câbles, disposés au niveau des deux bords de la pale, permet une plus grande stabilité de la pale lors des opérations d'assemblage et de désassemblage du segment de saumon avec le segment de pied directement sur l'éolienne. Ainsi, la pale selon l'invention peut être assemblée avec moins de risque de dégât d'un des segments, et plus généralement pour la pale.

De plus, l'utilisation d'un câble au niveau de chacun des bords de la pale, permet de positionner le segment de saumon par rapport au segment de pied plus rapidement et plus facilement, surtout lorsque le segment de pied est déjà fixée à l'éolienne. Par conséquent, la pale selon l'invention peut être assemblée, de manière sure, répétable, plus facile et plus rapide comparée aux systèmes existant d'assemblage de pales, ce qui est particulièrement intéressant et utile pour des éoliennes en zones cycloniques.

Dans la présente demande, pour un segment de pale donné, on entend par « extrémité proximale », l'extrémité du segment se trouvant du côté du pied de la pale et « extrémité distale », l'extrémité du segment se trouvant du côté du saumon de la pale. Ainsi :
- l'extrémité proximale du segment de saumon est celle se trouvant du côté du segment de pied et permettant d'assembler le segment de saumon sur le segment de pied ;
- l'extrémité distale du segment de saumon est celle formant le saumon de la pale ;
- l'extrémité proximale du segment de pied est celle se trouvant du côté du pied de pale, et permettant de fixer le segment de pied sur l'éolienne ; et
- l'extrémité distale du segment de pied est celle se trouvant du côté du segment de saumon et permettant d'assembler le segment de saumon sur le segment de pied.

Selon l'invention au moins un, préférentiellement chaque, enrouleur peut être disposé dans le segment de pied de pale, en particulier du côté de l'extrémité proximale du segment de pied.

Une telle disposition permet d'une part de réduire l'encombrement de la pale et d'intégrer les enrouleurs dans la pale pour, par exemple, les utiliser même lorsque la pale n'est pas fixée à l'éolienne, et d'autre part de ne pas entraver le fonctionnement d'un système de calage de la pale par pas variable positionné du côté du pied de pale.

Dans ce cas, le segment de pied peut comprendre, pour chaque câble :
- un chemin permettant au câble de traverser ledit segment de pied, de l'enrouleur jusqu'à l'extrémité distale dudit segment de pied sur laquelle est assemblé le segment de saumon,
- une ouverture agencée sur ladite extrémité distale du segment de pied permettant au câble de sortir dudit segment de pied pour être attaché au segment de saumon.

La pale selon l'invention peut en outre comprendre au moins un moyen d'attache du segment de saumon sur le segment de pied, lorsque lesdits segments sont assemblés entre eux.

Le moyen d'attache peut être commandé de manière hydraulique ou électrique.

Le moyen d'attache peut comprendre des moyens de serrage, tels qu'une mâchoire hydraulique ou électrique, venant serrer une (des) partie(s) mâle(s) du segment de saumon disposée(s) dans une partie femelle du segment de pied, lorsque lesdits segments sont assemblés.

Le moyen d'attache peut en plus ou alternativement comprendre des plots, par exemple des axes tronc conique, commandés par un ou des vérins ou moteurs, et venant s'insérer dans des ouvertures aménagées dans une(des) partie(s) mâle(s) du segment de saumon disposée(s) dans une partie femelle du segment de pied, lorsque lesdits segments sont assemblés.

Avantageusement, le moyen d'attache peut être disposé dans l'épaisseur du segment de pied, au niveau de l'extrémité d'assemblage du segment de pied avec le segment de saumon, c'est-à-dire au niveau de l'extrémité distale du segment de pied.

La pale selon l'invention peut comprendre des moyens de guidage pour guider l'assemblage du segment de saumon sur le segment de pied.

Les moyens de guidage peuvent comprendre au moins un moyen mâle, agencé sur l'extrémité proximale du segment de saumon, respectivement sur l'extrémité distale du segment de pied, ce moyen de guidage mâle venant s'insérer dans un moyen de guidage femelle, formé sur l'extrémité distale du segment de pied, respectivement sur l'extrémité proximale du segment de saumon.

Dans une version préférée, chaque moyen de guidage mâle est agencé sur l'extrémité proximale du segment de saumon, et chaque moyen de guidage femelle est formé sur l'extrémité distale du segment de pied.

Au moins un moyen de guidage mâle/femelle peut présenter une forme dont la section diminue progressivement, tel un cône ou un prisme droit par exemple.

Avantageusement, au moins un moyen de guidage mâle peut être au moins en partie arrondi, ou présenter sur un de ses bords/côtés, et en particulier un bord/côté latéral, un angle non nul par rapport à l'axe de la pale ou à l'axe de la section de pale, en vue de faciliter sa pénétration dans le moyen de guidage femelle de l'autre section.

Selon un exemple de réalisation avantageux, au moins un, préférentiellement chaque, câble peut être attaché à un moyen de guidage mâle, et de préférence à une extrémité du moyen de guidage mâle.

Plus particulièrement, l'ouverture de sortie d'au moins un, préférentiellement de chaque, câble peut être agencée dans un moyen de guidage femelle du segment de pied.

Chacun des moyens de guidage femelle aménagé sur l'extrémité distale du segment de pied peut comporter une ouverture d'accès aménagée, par exemple dans le fond du moyen de guidage femelle, permettant à un moyen d'attache d'accéder au moyen de guidage mâle qui vient s'insérer dans le moyen de guidage femelle, par exemple à l'extrémité du moyen mâle, pour venir en contact contre le moyen de guidage mâle, par exemple pour le serrer, ou s'insérer dans une ouverture aménagée dans le moyen de guidage mâle.

Plus particulièrement, le moyen de guidage mâle peut avoir une longueur supérieure à la profondeur du moyen de guidage femelle et le moyen femelle peut comporter une ouverture aménagée au fond dudit moyen de guidage femelle, de sorte que l'extrémité du moyen de guidage mâle dépasse le fond du moyen de guidage femelle d'une distance suffisante pour pouvoir être serrée par un moyen d'attache formé par une mâchoire tel que décrit plus haut.

Dans ce cas le ou les moyens d'attache sont aménagés dans l'épaisseur du segment de pied.

Chaque moyen de guidage mâle/femelle peut présenter une forme dont la section diminue progressivement, tel un cône ou un prisme droit par exemple.

Par ailleurs, au moins un moyen de guidage mâle peut être au moins en partie arrondi, ou présenter sur un de ses bords/côtés, et en particulier un bord/côté latéral, un angle non nul par rapport à l'axe de la pale ou à l'axe du segment de pale, en vue de faciliter sa pénétration dans le moyen de guidage femelle du segment adjacent.

La pale selon l'invention peut en outre comprendre au moins un moyen de freinage des câbles lors du désassemblage du segment de saumon.

Au moins un, préférentiellement, chaque moyen de freinage peut être intégré dans chacun des enrouleurs, et plus généralement intégré dans le segment de pied.

Avantageusement au moins un moyen de freinage peut être agencé pour agir sur la rotation de chacun des enrouleurs, pour freiner le déroulement des câbles.

Selon une caractéristique avantageuse, la pale selon l'invention peut en outre comprendre au moins un moyen d'éjection, disposé sur un des segments de pied ou de saumon et agencé pour pousser l'autre des segments de pied ou de saumon lorsque lesdits segments sont désassemblés pour amorcer le désassemblage.

Un tel moyen d'éjection permet de faciliter la séparation de deux segments de pied et de saumon.

Un tel moyen d'éjection peut être, au moins en partie intégré dans l'épaisseur d'un des segments de pied ou de saumon.

Un tel moyen d'éjection peut comprendre au moins un vérin hydraulique ou électrique.

Plus particulièrement, un tel moyen d'éjection peut être disposé sur l'extrémité distale du segment de pied et/ou sur l'extrémité proximale du segment de saumon.

Selon un mode de réalisation préféré de la pale, le moyen d'éjection peut comprendre un ou plusieurs vérins, hydrauliques ou électriques, disposés sur l'extrémité d'assemblage du segment de pied sur laquelle est assemblé le segment de saumon, et venant pousser sur l'extrémité d'assemblage du segment de saumon.

Plus particulièrement, le moyen d'éjection peut comprendre deux vérins disposés l'un du côté du bord d'attaque et l'autre du côté bord de fuite.

Les enrouleurs peuvent être commandés de manière synchronisée ou non, et préférentiellement de manière non synchronisée pour ajuster un angle d'assemblage et/ou de désassemblage du segment de saumon.

Préférentiellement, la vitesse de rotation de chaque enrouleur peut être réglée et commandée indépendamment de l'autre enrouleur, permettant ainsi de varier l'angle du segment de saumon par rapport au segment de pied lors de l'assemblage et/ou du désassemblage du segment de saumon de sorte à laisser plus de liberté sur le positionnement du segment de saumon, en particulier son inclinaison, par rapport au segment de pied lors des opérations d'assemblage et/ou de désassemblage desdits segments.

Au moins un, préférentiellement chaque, câble est un câble anti-giratoire, évitant ainsi la rotation du segment de saumon lors de la manipulation de ce segment.

Au moins un, préférentiellement chaque, câble peut présenter une longueur déterminée de sorte qu'il peut être accroché et décroché au segment de saumon lorsque ledit segment de saumon est disposé au sol.

Lorsque la section de saumon est au sol et que le ou les câbles est/sont détaché(s), un contrepoids peut être accroché au câble avant l'enroulement du ou des câble(s) sur l'enrouleur, afin de faciliter sa descente pour le remontage de la section saumon lors d'une opération d'assemblage ultérieure.

Selon une caractéristique avantageuse de l'invention, au moins un, préférentiellement chaque, moyen choisi dans la liste suivante peut être commandé à distance, préférentiellement in situ, par l'intermédiaire d'une console de commande sans fil, pour réaliser un désassemblage du segment de saumon du segment de pied :
- le ou les moyens d'attache,
- le ou les enrouleurs,
- le moyen d'éjection, et
- le ou les moyens de freinage.

Par exemple, ces moyens peuvent être commandés pour réaliser les opérations suivantes :
- désactivation du ou des moyens d'attache,
- désactivation du ou des enrouleurs pour permettre le déroulement libre ou maîtrisé du ou des câbles,
- le cas échéant, activation du moyen d'éjection, et
- activation du ou des moyens de freinage lorsque le segment de saumon est à une distance prédéterminée du sol pour permettre au segment de saumon d'être récupéré et posé au sol à une vitesse faible.

Avantageusement, les segments de pied et de saumon sont assemblés entre eux suivant un profil, dit d'assemblage, réalisé sur l'extrémité distale du segment de pied et sur l'extrémité proximale du segment de saumon, ledit profil d'assemblage étant composé :
- d'une portion, dite centrale, comportant deux extrémités distantes l'une de l'autre dans la direction de l'axe de ladite pale,
- d'au moins une première portion, dite de fuite, s'étendant vers un bord de fuite de ladite pale depuis une desdites extrémités de ladite portion centrale, et
- d'au moins une deuxième portion, dite d'attaque, s'étendant vers un bord d'attaque de ladite pale depuis l'autre desdites extrémités de ladite portion centrale.

Préférentiellement, le profil d'assemblage peut être réalisé de sorte que, pour chaque segment, chaque portion est formée par une surface reliant les deux faces du segment de pale se trouvant entre le bord de fuite et le bord d'attaque dudit segment.

En particulier, chaque portion peut être formée par une surface sensiblement perpendiculaire à un plan passant par les bords d'attaque et de fuite.

Avantageusement, les portions de fuite et d'attaque peuvent chacune être formée par une surface parallèle au plan formé par le pied de pale.

Alternativement, le profil d'assemblage peut être réalisé de sorte que, pour chaque segment, chaque portion forme une surface reliant le bord de fuite et le bord d'attaque dudit segment.

Dans ce cas, chacune des portions d'attaque et de fuite du segment de saumon peut avantageusement comporter un moyen de guidage mâle, prévu pour s'insérer dans un moyen de guidage femelle, agencé sur chacune des portions d'attaque et de fuite du segment de pied, en regard dudit moyen de guidage mâle, pour guider l'assemblage desdits segments.

Selon une caractéristique avantageuse et non limitative, le profil de découpe peut être positionné de telle sorte que la portion de fuite est plus proche du pied de la pale comparée à la portion d'attaque.

Un tel profil de découpe permet, pour chaque segment de déplacer le centre de gravité du segment de pale du côté du bord de fuite, en laissant plus de matière du côté du bord de fuite. Ainsi, lors de l'assemblage il est plus facile de faire basculer le segment de saumon et de l'emboiter sur le segment de pied. De même, une opération de désassemblage est facilitée pour les mêmes raisons.

Dans cette version avantageuse, le profil de découpe peut être avantageusement positionnée de sorte que la portion d'attaque et la portion de fuite de chacun des segments de pied et de saumon se trouvent de part et d'autre de la corde maximale de la pale, avec la portion de fuite se trouvant entre la corde maximale et le pied de la pale, et la portion d'attaque se trouvant entre la corde maximale et le saumon de la pale.

Ainsi, chaque segment de pale présente une largeur plus faible comparée à la corde maximale de la pale, ce qui facilite la manipulation de chaque segment de pale et leur transport.

En outre elle peut réduire avantageusement la voilure de la pale en cas de cyclone.

Avantageusement, la portion centrale peut comprendre un moyen de guidage, dit central, pour guider l'assemblage de deux segments de pied et de saumon, surtout lorsqu'ils entrent en contact l'un de l'autre.

Un tel moyen de guidage central peut par exemple comprendre un couple de moyens mâle/femelle disposé chacun sur un des segments.

Un tel moyen de guidage central peut comprendre un couple de moyen formant glissière, et facilitant le mouvement de translation relative des segments de saumon et de pied entre eux.

Selon un exemple de réalisation particulier, le moyen de glissière mâle peut être disposé sur la portion centrale du segment de saumon et le moyen de glissière femelle peut être disposé sur la portion centrale du segment de pied.

Un tel moyen de guidage central peut avantageusement être dans le même plan d'assemblage que le ou les plans des autres moyens de guidage, ou encore un plan parallèle au(x) plan(s) des autres moyens de guidage disposés sur les portions d'attaque et de fuite.

Selon une caractéristique particulière, la portion centrale peut former un angle non nul, noté β, par rapport à l'axe de la pale, et en particulier par rapport à l'axe du segment de pied, respectivement segment de saumon.

La valeur de l'angle non nul β peut être telle que 0<β≤90°, et préférentiellement telle que 0<β≤30°.

Une telle portion centrale formant un angle non nul par rapport à l'axe de la pale permet un assemblage plus aisé des segments, car elle permet d'accompagner l'assemblage des segments tout en autorisant les moyens de guidage, de guider et de centrer les deux segments entre eux. L'angle permet également de présenter plus facilement et plus rapidement le segment de saumon par rapport au segment de pied, et permet une plus grande liberté lors des opérations d'assemblage et de désassemblage des segments.

En outre, la portion d'attaque, respectivement la portion de fuite, peut former un angle droit avec le bord d'attaque, respectivement de fuite, au niveau du profil d'assemblage.

Suivant une caractéristique avantageuse, la portion d'attaque, respectivement la portion de fuite, peut comporter :
- une partie, dite décroche, formant un angle approximatif de 45° par rapport au bord d'attaque, respectivement au bord de fuite, du côté opposé à la portion centrale, et
- une partie formant un angle droit par rapport au bord d'attaque, respectivement au bord de fuite, du côté de la portion centrale.

Autrement dit, depuis la portion centrale, la portion d'attaque, respectivement de fuite, commence par une partie formant un angle droit par rapport au bord d'attaque, respectivement au bord de fuite, et peut se terminer par une décroche formant un angle approximativement de 45°, et plus généralement un angle différent de 90°, par rapport au bord d'attaque, respectivement au bord de fuite.

Cette décroche forme un élément de guidage additionnel, servant surtout à la fin d'une opération d'assemblage, c'est-à-dire lorsque les segments sont presque assemblés entre eux.

Cette décroche permet avantageusement, aussi, aux deux segments de pale de ne pas se désolidariser lorsque le rotor de la pale est en fonctionnement.

Avantageusement, la décroche peut être réalisée vers le saumon de la pale en ce qui concerne la portion de fuite, et/ou vers le pied de la pale en ce qui concerne la portion d'attaque.

Avantageusement, la portion de fuite, et/ou la portion d'attaque, d'un des segments adjacents peut comprendre un ou plusieurs plots centreurs, par exemple des axes tronc conique, venant se loger dans un ou des évidements aménagés sur la portion de fuite, et/ou la portion d'attaque, du segment adjacent, de sorte à centrer les segments entre eux lors d'une opération d'assemblage.

De plus, les plots centreurs permettent de maintenir la continuité de surface sous les efforts qui s'appliquent sur la pale en fonctionnement, évitant ainsi des discontinuités de surfaces qui peuvent être causées par ces efforts.

Selon un autre aspect de l'invention il est proposé une éolienne munie d'au moins une pale selon l'invention.

Plus particulièrement, chacune des pales de l'éolienne peut être une pale selon l'invention.

Par exemple, l'éolienne selon l'invention peut comporter deux, trois, quatre ou une multitude de pales.

D'autres avantages et caractéristiques apparaîtront à l'examen de la description détaillée d'exemples nullement limitatifs, et des dessins annexés sur lesquels :
- les FIGURES 1-4 sont des représentations schématiques de quatre exemples de pale selon l'invention ;
- les FIGURES 5-6 sont des représentations schématiques du segment de pied de pale de la FIGURE 4 ;
- la FIGURE 7 est une représentation schématique du segment de saumon de la pale de la FIGURE 4 ; et
- la FIGURE 8 est une représentation schématique d'une éolienne selon l'invention.

Il est bien entendu que les modes de réalisation qui seront décrits dans la suite ne sont nullement limitatifs. On pourra notamment imaginer des variantes de l'invention, ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique. La portée de l'invention est définie par les revendications annexées.

Sur les figures, les éléments communs à plusieurs figures conservent la même référence.

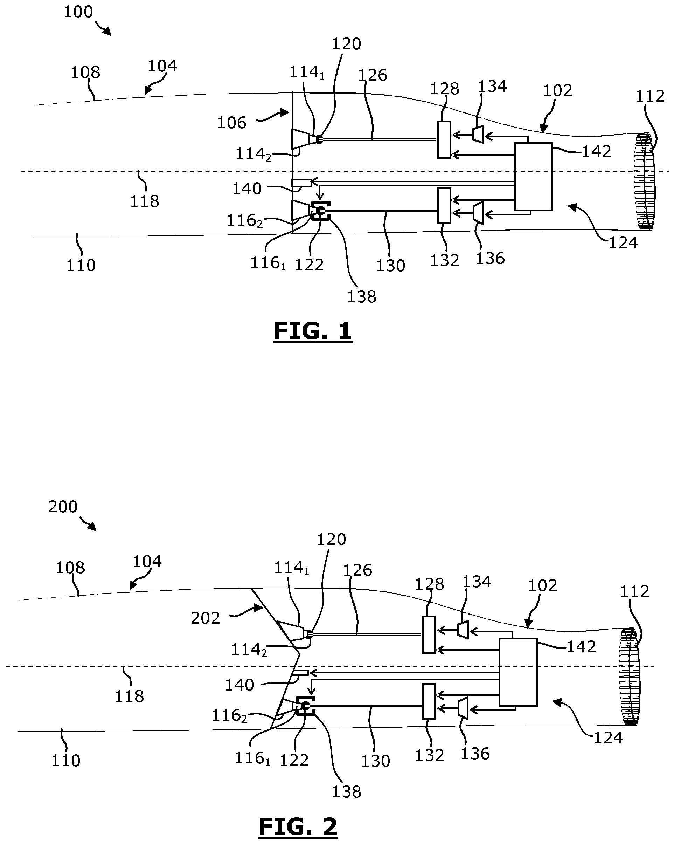

La FIGURE 1 est une représentation schématique d'un premier exemple de pale selon l'invention.

La pale 100 représentée sur la FIGURE 1 comprend deux segments 102 et 104 assemblés entre eux, de manière démontable, suivant un profil d'assemblage 106 rejoignant les bords 108 et 110 de la pale 100. Sur la FIGURE 1, les segments 102 et 104 sont représentés dans une configuration assemblés.

Dans l'exemple représenté sur la FIGURE 1, et dans la suite, le bord 108 est considéré comme le bord de fuite de la pale 100 et le bord 110 est le bord d'attaque de la pale 100. Bien entendu le bord 108 peut être le bord d'attaque et le bord 110 le bord de fuite.

Le segment 102, appelé segment de pied, comporte le pied de pale 112 de la pale 100 permettant d'accrocher la pale 100 à l'éolienne et plus particulièrement au rotor de l'éolienne. Le segment 104, appelé segment de saumon, comporte le saumon (non représenté) de la pale 100.

Le profil d'assemblage se présente sous la forme d'une coupe droite sensiblement perpendiculaire aux bords de fuite 108 et d'attaque 110.

Le segment de saumon 104 comporte un moyen de guidage mâle 114₁ et 116₁ disposés sur l'extrémité proximale du segment de saumon 104, c'est-à-dire sur son extrémité du côté du segment de pied 102. Les moyens de guidage mâle 114₁ et 116₁ sont disposés de part et d'autre de l'axe 118 de la pale 100, de sorte que le moyen de guidage mâle 114₁ est disposé du côté du bord de fuite 108 et le moyen de guidage mâle 116₁ est disposé du côté du bord d'attaque 110.

Le segment de pied 102 comprend deux moyens de guidage femelle 114₂ et 116₂ disposés sur son extrémité distale par rapport au pied 112 de pale 100, c'est-à-dire sur son extrémité sur laquelle le segment de saumon 104 est fixée. Les moyens de guidage femelle, respectivement 114₂ et 116₂, sont disposés en regard des moyens de guidage mâle, respectivement 114₁ et 116₁ de sorte qu'en configuration assemblée le moyen de guidage mâle 114₁, respectivement 116₁, vient s'insérer dans le moyen de guidage femelle 114₂, respectivement 116₂.

Chaque moyen de guidage mâle 114₁ et 116₁, présente une longueur supérieure à la profondeur de chaque moyen de guidage femelle, respectivement 114₂ et 116₂. De plus, chaque moyen de guidage femelle 114₂ et 116₂ comporte en son fond une ouverture (non représentée). Ainsi, dans la configuration assemblée, les moyens mâles 114₁ et 116₁ s'insèrent dans les moyens femelles, respectivement 114₂ et 116₂, et l'extrémité de chaque moyen de guidage mâle, 114₁ et 116₁, sort du moyen de guidage femelle, respectivement 114₂ et 116₂, par l'ouverture aménagée au fond de chaque moyen femelle, respectivement 114₂ et 116₂.

Chaque moyen de guidage mâle 114₁ et 116₁ comporte en son extrémité un moyen d'accroche, respectivement 120 et 122, tel qu'un anneau ou un crochet, pour y accrocher un câble.

Alternativement, le ou chaque moyen d'accroche peut être une ouverture aménagée sur l'extrémité du moyen de guidage mâle, prévue pour accueillir l'extrémité d'un câble, fixée par tous moyens adéquats tels qu'un axe et une goupille.

La pale 100 représentée sur la FIGURE 1 comporte un dispositif d'assemblage 124 permettant d'assembler et de désassembler les segments de fuite 102 et d'attaque 104. Le dispositif d'assemblage 122 est agencé dans l'épaisseur du segment de pied 102 du côté du pied 112 de la pale 100.

Le dispositif d'assemblage 122 comprend un premier câble 124, dont une extrémité est accrochée, de manière démontable ou amovible, au moyen d'accroche 120 disposé sur le moyen de guidage mâle 114₁ agencé sur le segment de saumon 104. Ce premier câble 126 est disposé du côté du bord de fuite 108 de la pale 100, c'est-à-dire entre l'axe 118 de la pale et le bord de fuite 108. Ce premier câble 126 est enroulé et déroulé par un enrouleur 128. Ce premier câble 126 traverse le segment de pied 102, de l'enrouleur 128 jusqu'à l'extrémité distale du segment de pied 102, au travers d'un chemin (non représenté) aménagé dans l'épaisseur de cette segment de pied 102 et vient s'accrocher sur le moyen d'accroche 120. Lorsque les segments de pied 102 et de saumon 104 sont désassemblés, le câble 126 reste accroché au moyen d'accroche 120, et sort du segment de pied 102 au travers de l'ouverture aménagée dans le fond du moyen de guidage femelle 114₂. Lorsque les segments 102 et 104 sont complètement désassemblés le câble 126 peut être décroché.

Le dispositif d'assemblage 122 comprend un deuxième câble 130, dont une extrémité est accrochée, de manière démontable ou amovible, au moyen d'accroche 122 disposé sur le moyen de guidage mâle 116₁ agencé sur le segment de saumon 104. Ce deuxième câble 130 est disposé du côté du bord d'attaque 110 de la pale 100, c'est-à-dire entre l'axe 118 de la pale et le bord d'attaque 110. Ce deuxième câble 130 est enroulé et déroulé par un enrouleur 132. Le câble 130 traverse le segment de pied 102, de l'enrouleur 132 jusqu'à l'extrémité distale du segment de pied 102, au travers d'un chemin (non représenté) aménagé dans l'épaisseur de ce segment de pied 102 et vient s'accrocher sur le moyen d'accroche 122. Lorsque les segments de pied 102 et de saumon 104 sont désassemblés, le câble 130 reste accroché au moyen d'accroche 122, et sort du segment de pied 102 au travers de l'ouverture aménagée dans le fond du moyen de guidage femelle 116₂. Lorsque les segments 102 et 104 sont complètement désassemblés le câble 130 peut être décroché.

Le dispositif d'assemblage 124 comprend en outre pour chaque enrouleur 128 et 132, un moyen de freinage, respectivement 134 et 136, pour modifier la vitesse de rotation de chaque enrouleur. Ainsi, par exemple, lorsque les segments 102 et 104 sont désassemblés et que le segment de saumon 104 est à une distance prédéterminée du sol, les enrouleurs 128 et 132 sont freinés pour réaliser une dépose très lente sur le sol du segment de saumon 104 pour ne pas abîmer ce segment de saumon 104. Chaque moyen de freinage 134 et 136 est intégré dans l'épaisseur du segment de pied 102 du côté du pied 112 de la pale. Bien entendu, le moyen de freinage de chaque enrouleur peut être intégré directement dans l'enrouleur.

Par ailleurs, le dispositif d'assemblage 124 de la pale 100 comprend une mâchoire 138 aménagée dans l'épaisseur du segment de pied 102, juste derrière le moyen de guidage femelle 116₂, et prévue pour venir serrer l'extrémité du moyen de guidage mâle 116₁ qui vient s'insérer dans le moyen de guidage femelle 116₂ en configuration assemblée.

En outre, le dispositif d'assemblage comprend un moyen d'éjection, tel qu'un vérin 140, agencé dans l'épaisseur du segment de pied 102, du côté de l'extrémité distale du segment de pied 102, et agencé pour venir pousser contre le segment de saumon 104, et en particulier sur l'extrémité proximale du segment de saumon 104, et initier le désassemblage des segments de pied 102 et de saumon 104. Optionnellement, le vérin 140 peut être un vérin double sens et peut éventuellement être agencé également pour tirer le segment distale 104 vers le segment proximal 102 lors de l'assemblage de segments 102 et 104. Pour ce faire, le vérin 140 peut être doté d'une tête aimantée et/ou d'une plaque métallique, venant coopérer avec un autre aimant et/ou une plaque disposé(e) en regard dudit aimant ou (de ladite plaque) sur le segment de saumon 104.

Enfin, les enrouleurs 128 et 132, les moyens de freinage 134 et 136, et la mâchoire 138 peuvent chacun être commandés de manière indépendante par l'intermédiaire d'une console de commande sans fil coopérant avec un récepteur sans fil 142, pour réaliser un désassemblage du segment de saumon du segment de pied.

En particulier, un désassemblage des segments de pied 102 et de saumon 104, par exemple en cas de cyclones, peut comprendre les opérations suivantes :
- désactivation du ou des moyens d'attache ;
- désactivation des enrouleurs 128 et 132, pour permettre le déroulement libre de chacun des câbles 126 et 130 ;
- le cas échéant, activation du moyen d'éjection,
- activation du ou des moyens de freinage 134 et 136, lorsque le segment de saumon 104 est à une distance prédéterminée du sol pour permettre au segment de saumon 104 de se poser sur le sol à une vitesse faible.

La FIGURE 2 est une représentation schématique d'un deuxième exemple de pale.

La pale 200 représentée sur la FIGURE 2 comprend tous les éléments de la pale 100 représentée sur la FIGURE 1.

La différence entre la pale 200 et la pale 100 consiste en la forme du profil d'assemblage. La pale 200 comprend un profil d'assemblage 202 se présentant sous la forme d'un triangle, avec le segment de saumon 104 venant s'insérer dans le segment de pied 102.

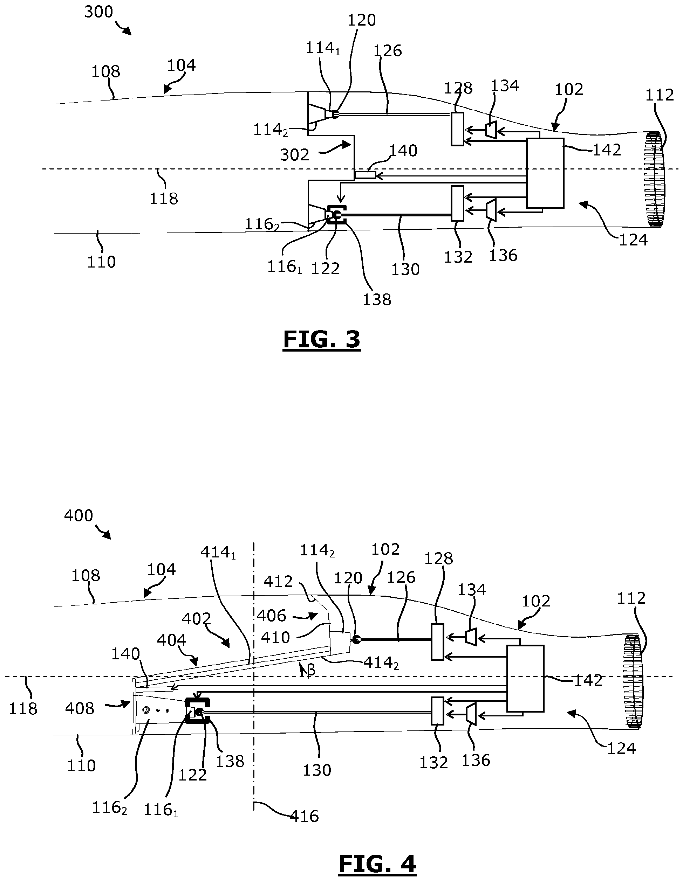

La FIGURE 3 est une représentation schématique d'un troisième exemple de pale.

La pale 300 représentée sur la FIGURE 3 comprend tous les éléments de la pale 100 représentée sur la FIGURE 1.

La différence entre la pale 300 et la pale 100 consiste en la forme du profil d'assemblage. La pale 300 comprend un profil d'assemblage 302 comportant une partie centrale rectangulaire venant s'insérer dans le segment de pied 102. Cette partie rectangulaire rejoint le bord de fuite 108 et le bord d'attaque 110 par deux parties latérales rectilignes, qui se trouvent en retrait par rapport au sommet de la partie rectangulaire. Autrement dit, la partie centrale rectangulaire fait saillie par rapport aux parties latérales, et les parties latérales sont plus proches du saumon de la pale comparée à la partie rectangulaire, suivant l'axe de la pale 300.

La FIGURE 4 est une représentation schématique d'un quatrième exemple de pale.

La pale 400 représentée sur la FIGURE 4 comprend tous les éléments de la pale 100 représentée sur la FIGURE 1.

La différence entre la pale 400 et la pale 100 consiste en la forme du profil d'assemblage.

Le profil d'assemblage 402 de la pale présente une forme générale en « Z » ou en « S ».

Le profil d'assemblage 402 comprend une portion centrale 404, une portion 406, dite de fuite, rejoignant la portion centrale 404 au bord de fuite 108, et une portion 408, dite d'attaque, rejoignant la portion centrale 404 au bord d'attaque 110.

La portion de fuite 406 comprend une partie 410 formant angle droit par rapport au bord de fuite 108 au niveau du profil d'assemblage, et une partie 412 formant un angle de 45° par rapport au bord de fuite 108 au niveau du profil d'assemblage, et plus généralement dirigée vers le saumon de la pale 400.

La portion d'attaque 408 forme un angle droit par rapport au bord d'attaque 110 au niveau du profil d'assemblage.

La pale 400 selon l'invention comporte, en plus par rapport aux pales 100-300, un moyen de guidage, dit central, aménagé sur la portion centrale 404 du profil d'assemblage 402 et se présentant sous la forme d'une glissière.

La portion centrale 404, présente un angle β non nul par rapport à l'axe 128 de la pale 400.

Le moyen de guidage central est réalisé par un couple formé par un moyen de guidage mâle 414₁ disposé sur le segment de saumon 104 et un moyen de guidage femelle 414₂ agencé sur le segment de pied, ces moyens de guidage mâle et femelle réalisant une glissière.

Cet exemple de pale présentant le profil d'assemblage 402 est un exemple de réalisation préféré car le profil d'assemblage permet de faciliter l'assemblage et le désassemblage des segments de pied 102 et de saumon 104.

Le profil d'assemblage est réalisé de sorte que la portion de fuite 406 et la portion d'attaque 408 se trouvent de part et d'autre de la corde maximale de la pale 400 matérialisée par la ligne 416. Plus particulièrement, le profil d'assemblage est réalisé de sorte que le segment de fuite 406 se trouve entre le pied de pale 112 et la corde maximale 416 et le segment d'attaque 408 se trouve entre le saumon de la pale et la corde maximale 416.

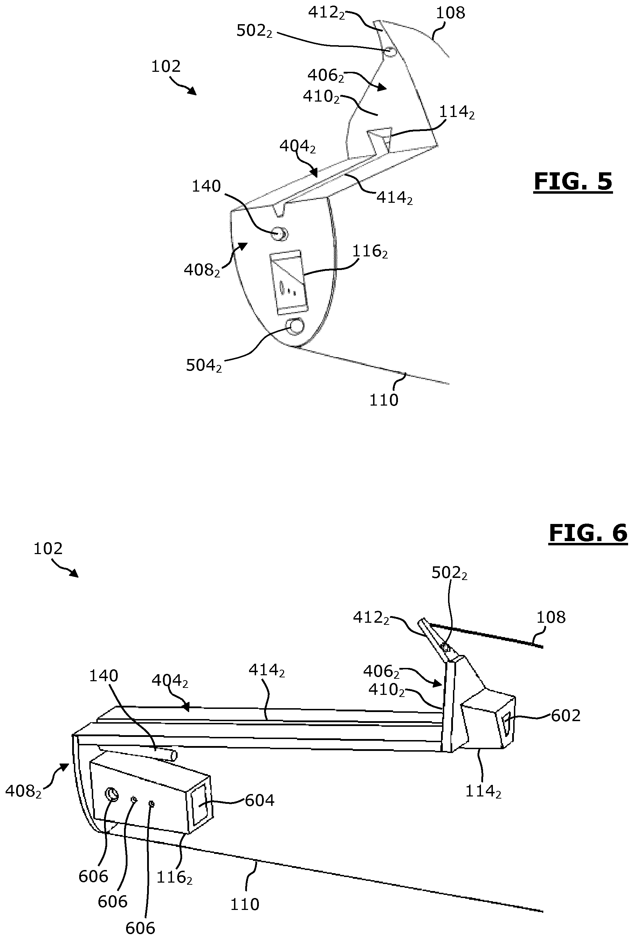

Nous allons maintenant décrire en référence aux FIGURES 5-7 les segments 102 et 104 de la pale 400 de la FIGURE 4, de manière individuelle.

Les FIGURES 5-6 sont des représentations schématiques individuelles du segment de pied de la pale 400 de la FIGURE 4, respectivement suivant une vue de devant et suivant une vue de côté.

Sur la FIGURE 6, la paroi extérieure du segment de pied 102 a été ôtée pour plus de clarté de représentation.

Le segment de pied 102 comporte le profil d'assemblage 402 sur son extrémité distale, qui peut également être désignée comme extrémité d'assemblage.

Le profil d'assemblage 402 est réalisé sur l'extrémité distale du segment de pied 102 par trois surfaces, respectivement 404₂, 406₂ et 408₂, se trouvant entre le bord d'attaque 110 et le bord de fuite 108. Chacune des surfaces 404₂, 406₂ et 408₂ rejoint les deux faces de la pale 400 se trouvant entre le bord d'attaque 110 et le bord de fuite 108. L'ensemble des trois surfaces rejoint le bord d'attaque 110 au bord de fuite 108.

Plus particulièrement, la surface 404₂ forme la portion centrale 404 du profil d'assemblage 402 et comporte le moyen de guidage central femelle 414₂ agencé sur cette portion centrale 404. La surface 406₂ forme la portion de fuite 406 du profil d'assemblage 402 et comporte le moyen de guidage de fuite femelle 114₂ agencé sur cette portion de fuite 406. La surface 408₂ forme la portion d'attaque 408 du profil d'assemblage 402 et comporte le moyen de guidage d'attaque femelle 116₂ agencé sur cette portion d'attaque 116.

En outre, la surface 406₂ formant la portion de fuite 406 comprend une surface 410₂ réalisant la partie 410 du segment de fuite 406 formant angle droit avec le bord de fuite 108, et une surface 412₂ réalisant la partie 412 de la portion de fuite 406 formant un angle de l'ordre de 45° par rapport au bord de fuite 108 dirigé vers la saumon de la pale.

Le segment de pied 102 comprend en outre, sur chacune des portions de fuite 406₂ et d'attaque 408₂, des évidements, respectivement 502₂ et 504₂, prévus pour recevoir des plots centreurs disposés sur le segment de saumon 104, en regard de ces évidements 502₂ et 504₂ et servant à centrer les segments 102 et 104 entre eux, lors d'une opération d'assemblage.

Tel que montré sur la FIGURE 6, le moyen de guidage femelle 114₂, respectivement le moyen de guidage femelle 116₂, agencé dans la portion de fuite 406, respectivement sur la portion d'attaque 408, comporte une ouverture de sortie 602, respectivement 604, aménagée dans son fond :
- d'une part pour laisser dépasser, l'extrémité du moyen de guidage mâle 114₁, respectivement 116₁, qui vient s'y insérer en configuration assemblée, en vue par exemple d'être maintenu par un moyen d'attache par serrage, tel qu'une mâchoire agencée dans l'épaisseur du segment de pied 102, derrière le (ou en partie arrière du) moyen de guidage femelle 114₂, respectivement 116₂, et
- d'autre part pour laisser passer le câble 126, respectivement 130, utilisé pour tirer le segment de saumon 104 vers le segment de pied 102 et dont une extrémité est attachée au segment de saumon 104.

En outre, le moyen de guidage femelle 116₂ agencé dans la portion de fuite 408 comporte une ouverture 606 (ou plusieurs ouvertures de même diamètre ou de diamètres différents), dite d'attache, aménagée sur ses parois latérales et traversant entièrement le moyen de guidage femelle 116₂, prévue pour accueillir un moyen d'attache mâle, tel qu'un plot de type axe tronc conique (non représenté), traversant le moyen de guidage femelle 116₂ et le moyen de guidage mâle 116₁ qui vient s'y insérer en configuration assemblée, en vue d'attacher les segments de pied 102 et de saumon 104 entre eux.

Le moyen de guidage femelle 114₂ peut également comporter une telle ouverture d'attache.

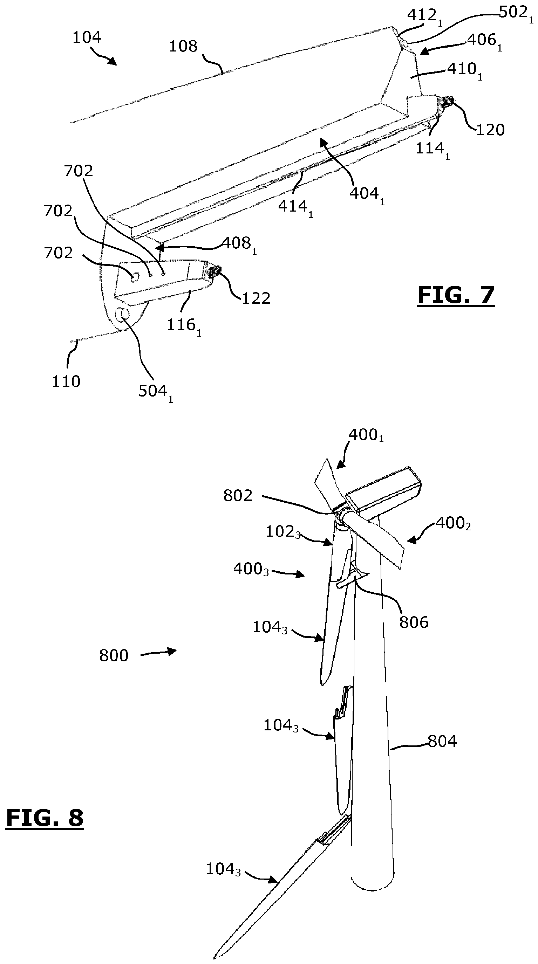

La FIGURE 7 est une représentation schématique partielle du segment de saumon de la pale 400 de la FIGURE 4 suivant une vue de devant.

Le segment de saumon 104 comporte le profil d'assemblage 402 sur son extrémité proximale, qui peut également être désignée comme extrémité d'assemblage.

Le profil d'assemblage 402 est réalisé sur l'extrémité proximale du segment de saumon 104 par trois surfaces, respectivement 404₁, 406₁ et 408₁, se trouvant entre le bord d'attaque 110 et le bord de fuite 108, rejoignant chacune les deux faces de la pale 400 se trouvant entre le bord d'attaque 110 et le bord de fuite 108. L'ensemble constitué par les trois surfaces 404₁, 406₁ et 408₁, rejoint le bord d'attaque 110 au bord de fuite 108.

Plus particulièrement, la surface 404₁ forme la portion centrale 404 du profil d'assemblage 402 et comporte le moyen de guidage central mâle 414₁ agencé sur cette portion centrale 404.

La surface 406₁ forme la portion de fuite 406 du profil d'assemblage 402 et comporte le moyen de guidage de fuite mâle 114₁ agencé sur cette portion de fuite 406.

La surface 408₁ forme la portion d'attaque 408 du profil d'assemblage 402 et comporte le moyen de guidage d'attaque mâle 116₁ agencé sur cette portion d'attaque 408.

En outre, la surface 406₁ formant la portion de fuite 406 comprend une surface 410₁ réalisant la partie 410 de la portion de fuite 406 formant angle droit avec le bord de fuite 108, et une surface 412₁ réalisant la partie 412 de la portion de fuite 406 formant un angle de l'ordre de 45° par rapport au bord de fuite 108 dirigé vers la saumon de la pale 400.

Par ailleurs, le moyen de guidage mâle 116₁, agencé dans la portion d'attaque 408, comporte une ouverture 702 (ou plusieurs ouvertures de même diamètre ou de diamètres différents), dite d'attache, aménagée sur ses parois latérales et traversant entièrement le moyen de guidage mâle 116₁. Cette ouverture d'attache 702 est prévue pour accueillir un moyen d'attache mâle, tel qu'un plot de type axe tronc conique (non représenté), traversant :
- le moyen de guidage femelle 116₂ dans le lequel le moyen de guidage mâle 116₁ s'insère en configuration assemblée, et
- le moyen de guidage mâle 116₁ lui-même,
en vue d'attacher le segment de saumon 104 au segment de pied 102.

Bien entendu, le moyen de guidage mâle 114₁ agencé dans la portion de fuite 408 peut également comporter une telle ouverture d'attache.

Le segment de saumon comprend en outre, sur chacune des portions de fuite 406₁ et d'attaque 408₁, un plot centreur, respectivement 502₁ et 504₁, venant se loger dans les évidements, respectivement 502₂ et 504₂, aménagés sur le segment de pied 102 tel que décrit plus haut.

La FIGURE 8 est une représentation schématique d'une éolienne selon l'invention.

L'éolienne 800 représentée sur la FIGURE 8 comprend trois pales 400₁-400₃ identiques entre elles et identiques à la pale 400 décrite sur les FIGURES 4 à 7.

Les pales 400₁-400₃ sont fixées sur un rotor 802 agencé rotatif sur un châssis monté sur un mât vertical 804.

La FIGURE 8 montre, avec l'exemple de la pale 400₃, la trajectoire du segment de saumon 104₃ lors d'une opération d'assemblage (du sol vers le segment de pied 102₃), et lors d'une opération de désassemblage (du segment de pied 102₃ vers le sol). Les câbles d'assemblage ont été omis pour plus de clarté.

L'éolienne 800 comprend en outre une plateforme 806 fixée au mât vertical 804 et repliable vers le mât vertical 806. Cette plateforme 806 a pour fonction de faciliter le guidage du segment de saumon 104 d'une pale 400 lors de sa descente/remontée. La plateforme 806 comprend une articulation par vérin hydraulique et deux câbles de maintien en sécurité. Elle est positionnée sur le mât 804 juste en-dessous de la portion d'attaque 116. Elle est dimensionnée pour qu'un opérateur puisse monter dessus pour des opérations de maintenance. Elle comporte une découpe, par exemple en forme de « V » ou « U », permettant d'accueillir le bord de fuite 108 du segment de saumon 104 et d'accompagner la descente et la remontée du segment de saumon 104 en restant assez proche de sa surface et le guidage du bord de fuite 108 par exemple via des rouleaux montés sur ressorts.

Bien entendu l'invention n'est pas limitée aux exemples qui viennent d'être décrits.

## Revendications

1. Pale d'éolienne (100-400) comportant :
- deux segments de pale (102, 104) assemblés entre eux de manière démontable, l'un (102) desdits segments, dit segment de pied, comportant le pied (112) de ladite pale (100-400), et l'autre (104) desdits segments, dit segment de saumon, comportant le saumon de la pale (100-400), et
- un dispositif (124), dit d'assemblage, desdits segments (102, 104) entre eux ;
**caractérisée en ce que** ledit dispositif (124) comprend :
- au moins un premier câble (126) disposé du côté du bord de fuite (108) de la pale, et attaché d'une part au segment de saumon (104) et d'autre part à un premier enrouleur (128) disposé du côté du segment de pied (102), et
- au moins un deuxième câble (130) disposé du côté du bord d'attaque (110) de la pale, et attaché d'une part au segment de saumon (104) et d'autre part à un deuxième enrouleur (132) disposé du côté du segment de pied (102) ;
chacun desdits câbles (126, 130) étant prévu pour tirer le segment de saumon (104) vers le segment de pied (102) lors de l'assemblage desdits segments (102, 104) et accompagner le segment de saumon (104) lors du désassemblage desdits segments (102, 104).

2. Pale (100-400) selon la revendication 1, **caractérisée en ce qu'**elle comprend en outre au moins un moyen d'attache (138, 606, 702) du segment de saumon (104) sur le segment de pied (102), lorsque lesdits segments (102, 104) sont assemblés entre eux.

3. Pale (100-400) selon l'une quelconque des revendications précédentes, **caractérisée en ce qu'**elle comprend au moins un moyen de freinage (134, 136) des câbles (126, 130) lors du désassemblage du segment de saumon (104).

4. Pale (100-400) selon l'une quelconque des revendications précédentes, **caractérisée en ce qu'**elle comprend au moins un moyen d'éjection (140), disposé sur un (102) des segments de pied ou de saumon et agencé pour pousser l'autre (104) des segments de pied ou de saumon lorsque lesdits segments (102, 104) sont désassemblés pour amorcer le désassemblage.

5. Pale (100-400) selon la revendication précédente, **caractérisée en ce que** le moyen d'éjection comprend un ou plusieurs vérins (140), hydrauliques ou électriques, disposés sur l'extrémité d'assemblage du segment de pied (102) sur laquelle est assemblé le segment de saumon (104), et venant pousser sur l'extrémité d'assemblage du segment de saumon (104).

6. Pale (100-400) selon l'une quelconque des revendications précédentes, **caractérisée en ce qu'**au moins un, préférentiellement chaque, enrouleur (128,132) est disposé dans le segment de pied (102) du côté du pied (112) de la pale.

7. Pale (100-400) selon la revendication précédente, **caractérisée en ce que** le segment de pied (102) comprend, pour chaque câble (126, 130) :
- un chemin permettant au câble (126, 130) de traverser ledit segment de pied (102), de l'enrouleur (128, 132) jusqu'à l'extrémité, dite d'assemblage, dudit segment de pied (102) sur laquelle est assemblé le segment de saumon (104),
- une ouverture (602, 604) agencée sur ladite extrémité d'assemblage du segment de pied (102) permettant au câble (126, 130) de sortir dudit segment de pied (102) pour être attachée au segment de saumon (104).

8. Pale (100-400) selon l'une quelconque des revendications précédentes, **caractérisée en ce qu'**au moins un câble (126, 130) est un câble anti-giratoire.

9. Pale (100-400) selon l'une quelconque des revendications précédentes, **caractérisée en ce qu'**au moins un, préférentiellement chaque, câble (126, 130) présente une longueur déterminée de sorte qu'il peut être accroché et décroché au segment de saumon (104) lorsque ledit segment de saumon (104) est déposé au sol.

10. Pale (100-400) selon l'une quelconque des revendications précédentes, **caractérisée en ce que** les enrouleurs (128, 132) fonctionnent de manière non synchronisée pour ajuster un angle d'assemblage et/ou de désassemblage du segment de saumon (104).

11. Pale (100-400) selon l'une quelconque des revendications précédentes, **caractérisée en ce qu'**elle comprend un moyen de commande (142) d'un désassemblage du segment de saumon (104) du segment de pied (102).

12. Pale (400) selon l'une quelconque des revendications précédentes, **caractérisée en ce que** les segments de pied (102) et de saumon (104) sont assemblés entre eux suivant un profil (402), dit d'assemblage, ledit profil d'assemblage (402) étant composé :
- d'une portion (404), dite centrale, comportant deux extrémités distantes l'une de l'autre dans la direction de l'axe (118) de ladite pale (400),
- d'au moins une première portion (406), dite de fuite, s'étendant vers un bord de fuite (108) de ladite pale (400) depuis une desdites extrémités de ladite portion centrale (404), et
- d'au moins une deuxième portion (408), dite d'attaque, s'étendant vers un bord d'attaque (110) de ladite pale (400) depuis l'autre desdites extrémités de ladite portion centrale (404).

13. Pale (400) selon la revendication 12, **caractérisée en ce que** chacune des portions d'attaque (408₁) et de fuite (406₁) du segment de saumon (104) comporte un moyen de guidage mâle (116₁, 114₁), prévu pour s'insérer dans un moyen de guidage femelle (116₂, 114₂), agencé sur chacune des portions d'attaque (408₂) et de fuite (406₂) du segment de pied (102), en regard dudit moyen de guidage mâle (116₁, 114₁), pour guider l'assemblage desdits segments (102, 104).

14. Pale (400) selon la revendication 13, **caractérisée en ce que** chacun des câbles (126, 130) est attaché aux moyens de guidage mâle (116₁, 114₁) du segment de saumon, et sort du segment de pied (102) au travers d'une ouverture (602, 604) aménagée dans chacun des moyens femelle (116₂, 114₂) du segment de pied (102).

15. Eolienne (800) munie d'au moins une pale (400₁-400₃) selon l'une quelconque des revendications précédentes.

## Patentansprüche

1. Rotorblatt einer Windkraftanlage (100-400) umfassend:
- zwei abnehmbar miteinander zusammengebaute Rotorblattsegmente (102, 104), wobei das eine (102) der Segmente, das sogenannte Blattwurzelsegment, die Blattwurzel (112) des Rotorblatts (100-400) umfasst und das andere (104) der Segmente, das sogenannte Endkappensegment, die Endkappe des Rotorblatts (100-400) umfasst, und
- eine Vorrichtung (124) zum sogenannten Zusammenbau der Segmente (102, 104) miteinander;
**dadurch gekennzeichnet, dass** die Vorrichtung (124) umfasst:
- mindestens ein erstes Seil (126), welches auf der Seite der Hinterkante (108) des Rotorblatts angeordnet ist und einerseits an dem Endkappensegment (104) und andererseits an einem ersten, auf der Seite des Blattwurzelsegments (102) angeordneten Aufwickler (128) befestigt ist, und
- mindestens ein zweites Seil (130), welches auf der Seite der Stirnkante (110) des Rotorblatts angeordnet ist und einerseits an dem Endkappensegment (104) und andererseits an einem zweiten, auf der Seite des Blattwurzelsegments (102) angeordneten Aufwickler (132) befestigt ist;
wobei die Seile (126, 130) jeweils dafür vorgesehen sind, bei dem Zusammenbau der Segmente (102, 104) das Endkappensegment (104) zum Blattwurzelsegment (102) hin zu ziehen und bei dem Auseinanderbau der Segmente (102, 104) mit dem Endkappensegment (104) mitzugehen.

2. Rotorblatt (100-400) nach Anspruch 1, **dadurch gekennzeichnet, dass** es außerdem mindestens ein Befestigungsmittel (138, 606, 702) des Endkappensegments (104) an dem Blattwurzelsegment (102) umfasst, wenn die Segmente (102, 104) miteinander zusammengebaut sind.

3. Rotorblatt (100-400) nach einem der vorhergehenden Ansprüche, **dadurch gekennzeichnet, dass** es mindestens eine Bremsvorrichtung (134, 136) der Seile (126, 130) bei dem Auseinanderbau des Endkappensegments (104) umfasst.

4. Rotorblatt (100-400) nach einem der vorhergehenden Ansprüche, **dadurch gekennzeichnet, dass** es mindestens ein Mittel zum Auswurf (140) umfasst, welches auf einem (102) des Endkappensegments oder des Blattwurzelsegments gelagert und dazu angeordnet ist, auf das andere (104) des Endkappensegments oder des Blattwurzelsegments zu drücken, wenn die Segmente (102, 104) zum Start des Auseinanderbaus auseinander gebaut werden.

5. Rotorblatt (100-400) nach dem vorhergehenden Anspruch, **dadurch gekennzeichnet, dass** das Mittel zum Auswurf ein oder mehrere hydraulische oder elektrische Zylinder (140) umfasst, welche auf dem Zusammenbau-Ende des Blattwurzelsegments (102) gelagert sind, auf welchem das Endkappensegment (104) montiert ist, und auf das Zusammenbau-Ende des Endkappensegments (104) drücken.

6. Rotorblatt (100-400) nach einem der vorhergehenden Ansprüche, **dadurch gekennzeichnet, dass** mindestens ein, vorzugsweise jeder Aufwickler (128, 132) in dem Blattwurzelsegment (102) auf der Seite des Blattwurzels (112) des Rotorblatts gelagert ist.

7. Rotorblatt (100-400) nach dem vorhergehenden Anspruch, **dadurch gekennzeichnet, dass** das Blattwurzelsegment (102) für jedes Seil (126, 130) umfasst:
- einen Pfad, mit Hilfe dessen das Seil (126, 130) durch das Blattwurzelsegment (102), von dem Aufwickler (128, 132) ausgehend bis zu dem sogenannten Zusammenbau-Ende des Blattwurzelsegments (102) hindurch führbar ist, auf welchem das Endkappensegment (104) montiert ist,
- eine Öffnung (602, 604), welche auf dem Zusammenbau-Ende des Blattwurzelsegments (102) angeordnet ist, mit Hilfe derer das Seil (126, 130) aus dem Blattwurzelsegment (102) heraus führbar ist, um an dem Endkappensegment (104) befestigt zu werden.

8. Rotorblatt (100-400) nach einem der vorhergehenden Ansprüche, **dadurch gekennzeichnet, dass** mindestens ein Seil (126, 130) ein drehungsfreies Seil ist.

9. Rotorblatt (100-400) nach einem der vorhergehenden Ansprüche, **dadurch gekennzeichnet, dass** mindestens ein, vorzugsweise jedes Seil (126, 130) eine derart bestimmte Länge aufweist, sodass es an dem Endkappensegment (104) gehängt und abgehängt werden kann, wenn das Endkappensegment (104) auf dem Boden abgelegt ist.

10. Rotorblatt (100-400) nach einem der vorhergehenden Ansprüche, **dadurch gekennzeichnet, dass** die Aufwickler (128, 132) bei der Anpassung eines Zusammenbau- und/oder Auseinanderbau-Winkels des Endkappensegments (104) nicht synchron wirken.

11. Rotorblatt (100-400) nach einem der vorhergehenden Ansprüche, **dadurch gekennzeichnet, dass** es eine Steuervorrichtung (142) zu einem Auseinanderbau des Endkappensegments (102) vom Blattwurzelsegment (102) umfasst.

12. Rotorblatt (400) nach einem der vorhergehenden Ansprüche, **dadurch gekennzeichnet, dass** das Blattwurzelsegment (102) und das Endkappensegment (104) nach einem sogenannten Zusammenbau-Profil (402) miteinander zusammengebaut sind, wobei das Zusammenbau-Profil (402) besteht aus:
- einem sogenannten Mittelabschnitt (404), der zwei voneinander in der Richtung der Mittellinie (118) des Rotorblatts (400) beabstandeten Enden umfasst,
- mindestens einem ersten, sogenannten Hinterabschnitt (406), welcher sich zu einer Hinterkante (108) des Rotorblatts (400) ausgehend von einem der Enden des Mittelabschnitts (404) hin erstreckt, und
- mindestens einem zweiten, sogenannten Stirnabschnitt (408), welcher sich zu einer Stirnkante (110) des Rotorblatts (400) ausgehend von dem anderen der Enden des Mittelabschnitts (404) hin erstreckt.

13. Rotorblatt (400) nach Anspruch 12, **dadurch gekennzeichnet, dass** jeweils der Stirnabschnitt (408₁) und der Hinterabschnitt (406₁) des Endkappensegments (104) ein Steckerführungsmittel (116₁, 114₁) umfassen, das dafür vorgesehen ist, in ein Buchsenführungsmittel (116₂, 114₂) eingesteckt zu werden, das jeweils auf dem Stirnabschnitt (408₂) und dem Hinterabschnitt (406₂) des Blattwurzelsegments (102) gegenüber dem Steckerführungsmittel (116₁, 114₁) angeordnet ist, um den Zusammenbau der Segmente (102, 104) zu führen.

14. Rotorblatt (400) nach Anspruch 13, **dadurch gekennzeichnet, dass** die Seile (126, 130) jeweils an den Steckerführungsmitteln (116₁, 114₁) des Endkappensegments befestigt sind und aus dem Blattwurzelsegment (102) durch eine in den jeweiligen Buchsenführungsmitteln (116₂, 114₂) des Blattwurzelsegments (102) angeordnete Öffnung (602, 604) hindurch heraus geführt werden.

15. Windkraftanlage (800) mit mindestens einem Rotorblatt (400₁-400₃) nach einem der vorhergehenden Ansprüche.

## Claims

1. Wind turbine blade (100-400) including:
- two blade segments (102,104) removably assembled together, one (102) of said segments, called root segment, including the root (112) of said blade (100-400), and the other (104) of said segments, called tip segment, including the tip of the blade (100-400), and
- a device (124), called assembly device, for assembling said segments (102, 104) together;
**characterized in that** said device (124) comprises:
- at least one first cable (126) arranged on the side of the trailing edge (108) of the blade, and attached on the one hand to the tip segment (104) and on the other hand to a first winder (128) arranged on the side of the root segment (102), and
- at least one second cable (130) arranged on the side of the leading edge (110) of the blade, and attached on the one hand to the tip segment (104) and on the other hand to a second winder (132) arranged on the side of the root segment (102);
each of said cables (126,130) being intended to pull the tip segment (104) towards the root segment (102) during assembly of said segments (102, 104) and to support the tip segment (104) during disassembly of said segments (102, 104).

2. Blade (100-400) according to claim 1, **characterized in that** it also comprises at least one attachment means (138,606,702) of the tip segment (104) onto the root segment (102), when said segments (102,104) are assembled together.

3. Blade (100-400) according to any one of the preceding claims, **characterized in that** it comprises at least one braking means (134,136) of the cables (126,130) during disassembly of the tip segment (104).

4. Blade (100-400) according to any one of the preceding claims, **characterized in that** it comprises at least one ejection means (140), arranged on one (102) of the root or tip segments and arranged in order to push the other (104) of the root or tip segments when said segments (102,104) are disassembled in order to initiate disassembly.

5. Blade (100-400) according to the preceding claim, **characterized in that** the ejection means comprises one or more hydraulic or electric cylinders (140) arranged on the assembly end of the root segment (102) on which the tip segment is assembled (104), and pushing on the assembly end of the tip segment (104).

6. Blade (100-400) according to any one of the preceding claims, **characterized in that** at least one, preferentially each, winder (128,132) is arranged in the root segment (102) on the side of the root (112) of the blade.

7. Blade (100-400) according to the preceding claim, **characterized in that** the root segment (102) comprises, for each cable (126,130):
- a path allowing the cable (126,130) to pass through said root segment (102), from the winder (128,132) to the end, called assembly end, of said root segment (102) on which the tip segment is assembled (104),
- an opening (602,604) arranged on said assembly end of the root segment (102) allowing the cable (126,130) to exit from said root segment (102) in order to be attached to the tip segment (104).

8. Blade (100-400) according to any one of the preceding claims, **characterized in that** at least one cable (126,130) is a non-rotating cable.

9. Blade (100-400) according to any one of the preceding claims, **characterized in that** at least one, preferentially each, cable (126,130) has a determined length so that it can be attached and removed from the tip segment (104) when said tip segment (104) is placed on the ground.

10. Blade (100-400) according to any one of the preceding claims, **characterized in that** the winders (128,132) operate in a non-synchronized manner in order to adjust an angle of assembly and/or disassembly of the tip segment (104).

11. Blade (100-400) according to any one of the preceding claims, **characterized in that** it comprises a control means (142) for disassembly of the tip segment (104) from the root segment (102).

12. Blade (400) according to any one of the preceding claims, **characterized in that** the root (102) and tip (104) segments are assembled together along a profile (402), called assembly profile, said assembly profile (402) being composed of:
- a portion (404), called central portion, including two ends distant from one another in the direction of the axis (118) of said blade (400),
- at least one first portion (406), called trailing portion, extending towards a trailing edge (108) of said blade (400) from one of said ends of said central portion (404), and
- at least one second portion (408), called leading portion, extending towards a leading edge (110) of said blade (400) from the other of said ends of said central portion (404).

13. Blade (400) according to claim 12, **characterized in that** each of the leading (408₁) and trailing (406₁) portions of the tip segment (104) include a male guide means (116₁,114₁), intended for insertion into a female guide means (116₂,114₂), arranged on each of the leading (408₂) and trailing (406₂) portions of the root segment (102), facing said male guide means (116₁,114₁), in order to guide the assembly of said segments (102,104).

14. Blade (400) according to claim 13, **characterized in that** each of the cables (126,130) is attached to the male guide means (116₁,114₁) of the tip segment, and exits from the root segment (102) through an opening (602,604) provided in each of the female means (116₂,114₂) of the root segment (102).

15. Wind turbine (800) equipped with at least one blade (400₁-400₃) according to any one of the preceding claims.
